# EUROPEAN PATENT APPLICATION

(11) **EP 4 432 551 A1**
(43) Date of publication of application: **18.09.2024**
(21) Application number: 22892543.4
(22) Date of filing: 21.10.2022
(51) Int. Cl.: H02P 29/00

(54) **CONTROL DEVICE, CONTROL SYSTEM, AND PROCESSING METHOD**

(30) Priority: 10.11.2021 JP 2021183230
(71) Applicant: OMRON Corporation, Kyoto 600-8530 (JP)
(72) Inventor: NISHIMURA, Tomohiro, Kyoto-shi, Kyoto 600-8530 (JP)
(74) Representative: Mewburn Ellis LLP
(86) International application number: PCT/JP2022/039238
(87) International publication number: WO 2023/085043

(57) **Abstract**

Means for achieving a new object which is reduction of jitter in position data which may be caused while a motor mechanically coupled to an encoder is stopped is provided. A control device includes an obtaining unit configured to obtain position data from an encoder, a smoothing unit configured to smooth the position data from the encoder, a state detector configured to detect an operating state of the motor mechanically coupled to the encoder, and an output unit configured to output the position data from the encoder every control cycle. The output unit is configured to output the position data from the encoder as it is while the motor is operating and to output the smoothed position data while the motor is stopped.

## Description

### TECHNICAL FIELD

The present invention relates to a control device connected to an encoder, a control system including the control device, and a processing method in the control device.

### BACKGROUND ART

In driving an object with a motor, a configuration to obtain information on a position, a speed, an acceleration, or the like of the motor or the object based on a signal from an encoder mechanically coupled to a rotation shaft of the motor is generally adopted. In order to more precisely control the object, an error caused in the information based on the signal from the encoder should be reduced.

For example, PTL 1 (Japanese Patent Laying-Open No. 2013-078859) discloses a solution for encoder direct signals that vary by about 1 µs to 2 µs each time (vary in 1 µs order). PTL 2 (Japanese Patent Laying-Open No. 2020-142442) discloses a solution for an encoder varied in scale cycle by part accuracy. PTL 3 (Japanese Patent Laying-Open No. 2018-025391) discloses means for solving fluctuation of generation time which is called jitter in a pulsed signal generated by an encoder.

### CITATION LIST

### PATENT LITERATURE

PTL 1: Japanese Patent Laying-Open No. 2013-078859
PTL 2: Japanese Patent Laying-Open No. 2020-142442
PTL 3: Japanese Patent Laying-Open No. 2018-025391

### SUMMARY OF INVENTION

### TECHNICAL PROBLEM

The solution disclosed in prior art documents described above are directed to a factor for an error included in a signal outputted as the encoder operates.

In contrast, the present invention provides a solution for achieving a new object which is reduction of jitter in position data which may be caused while a motor mechanically coupled to an encoder is stopped.

### SOLUTION TO PROBLEM

A control device according to one example of the present invention includes an obtaining unit configured to obtain position data from an encoder, a smoothing unit configured to smooth the position data from the encoder, a state detector configured to detect an operating state of a motor mechanically coupled to the encoder, and an output unit configured to output the position data from the encoder every control cycle. The output unit is configured to output the position data from the encoder as it is while the motor is operating and to output smoothed position data while the motor is stopped. According to this configuration, since the position data from the encoder is outputted as it is while the motor is operating, control of the motor is not affected. On the other hand, since the smoothed position data is outputted while the motor is stopped, jitter in the position data which may be caused while the motor is stopped can be reduced.

The state detector may be configured to determine whether the motor is operating based on magnitude of temporal change in position data from the encoder. According to this configuration, since whether or not the motor is operating can be determined based on the position data from the encoder, the configuration necessary for processing can be simplified.

The smoothing unit may be configured to calculate average value data by averaging a plurality of pieces of position data. According to this configuration, the position data can be smoothed by relatively simplified processing such as averaging of a plurality of pieces of position data.

The number of pieces of position data to be used for calculation of the average value data may freely be set. According to this configuration, the number of pieces of position data can freely be adjusted in accordance with magnitude of jitter in the position data obtained from the encoder.

The output unit may be configured to output the position data obtained immediately after start of each control cycle while the motor is operating. According to this configuration, the position data immediately after start of the control cycle is outputted while the motor is operating. Therefore, even when the control cycle varies, timing of output of the position data can be fixed and hence control performance can be maintained.

The encoder may include an absolute encoder. According to this configuration, when the position data outputted from the absolute encoder includes jitter, the jitter can be reduced.

A control system according to another example of the present invention includes a control device and a motor controlled by the control device. The control device includes a control computing unit configured to calculate a control command to control the motor, an obtaining unit configured to obtain position data from an encoder mechanically coupled to the motor, a smoothing unit configured to smooth the position data from the encoder, a state detector configured to detect an operating state of the motor, and an output unit configured to output the position data from the encoder to the control computing unit every control cycle. The output unit is configured to output the position data from the encoder as it is while the motor is operating and to output smoothed position data while the motor is stopped.

The control system may further include a display configured to show a state of the position data from the encoder and a state of the smoothed position data. According to this configuration, the state of the position data from the encoder and the state of the smoothed position data can be checked.

The control system may further include a receiver configured to receive setting of a degree of smoothing by the smoothing unit. According to this configuration, the degree of smoothing can be adjusted as appropriate in accordance with jitter caused in the position data.

A processing method according to yet another example of the present invention includes obtaining position data from an encoder, detecting an operating state of a motor mechanically coupled to the encoder, and outputting the position data from the encoder as it is while the motor is operating and outputting smoothed position data obtained by smoothing the position data from the encoder while the motor is stopped.

### ADVANTAGEOUS EFFECTS OF INVENTION

The present invention can provide a solution for achieving a new object which is reduction of jitter in position data which may be caused while a motor mechanically coupled to an encoder is stopped.

### BRIEF DESCRIPTION OF DRAWINGS

Fig. 1 is a schematic diagram showing an exemplary configuration of a control system according to the present embodiment.
Fig. 2 is a schematic diagram showing an exemplary main hardware configuration of the control system according to the present embodiment.
Fig. 3 is a diagram for illustrating an exemplary principle of detection by an encoder in the control system according to the present embodiment.
Fig. 4 is a schematic diagram showing exemplary jitter which may be caused in the encoder in the control system according to the present embodiment.
Fig. 5 is a schematic diagram showing an exemplary functional configuration of a jitter reduction unit in the control system according to the present embodiment.
Fig. 6 shows an exemplary time chart for illustrating processing in the jitter reduction unit in the control system according to the present embodiment.
Fig. 7 shows a specific example (while a servo motor is stopped) of the time chart for illustrating processing in the jitter reduction unit in the control system according to the present embodiment.
Fig. 8 shows a specific example (while the servo motor is operating) of the time chart for illustrating processing in the jitter reduction unit in the control system according to the present embodiment.
Fig. 9 is a flowchart showing a processing procedure in a stage control unit in the control system according to the present embodiment.
Fig. 10 is a diagram showing an exemplary effect of jitter reduction by the jitter reduction unit in the control system according to the present embodiment.
Fig. 11 shows an exemplary time chart for illustrating a modification of processing in the jitter reduction unit in the control system according to the present embodiment.
Fig. 12 is a schematic diagram showing an exemplary implementation of the stage control unit in the control system according to the present embodiment.
Fig. 13 is a schematic diagram showing an exemplary screen shown on an operation display device in the control system according to the present embodiment.
Fig. 14 shows an exemplary time chart for illustrating analysis processing in the control system according to the present embodiment.
Fig. 15 shows an exemplary time chart for illustrating jitter reduction processing in the control system according to the present embodiment.

### DESCRIPTION OF EMBODIMENTS

An embodiment of the present invention will be described in detail with reference to the drawings. The same or corresponding elements in the drawings have the same reference characters allotted and description thereof will not be repeated.

### <A. Exemplary Application>

An exemplary scene to which the present invention is applied will initially be described. Though a configuration including a servo motor as a typical exemplary motor is exemplified herein, the type of the motor is not limited and any motor may be applicable.

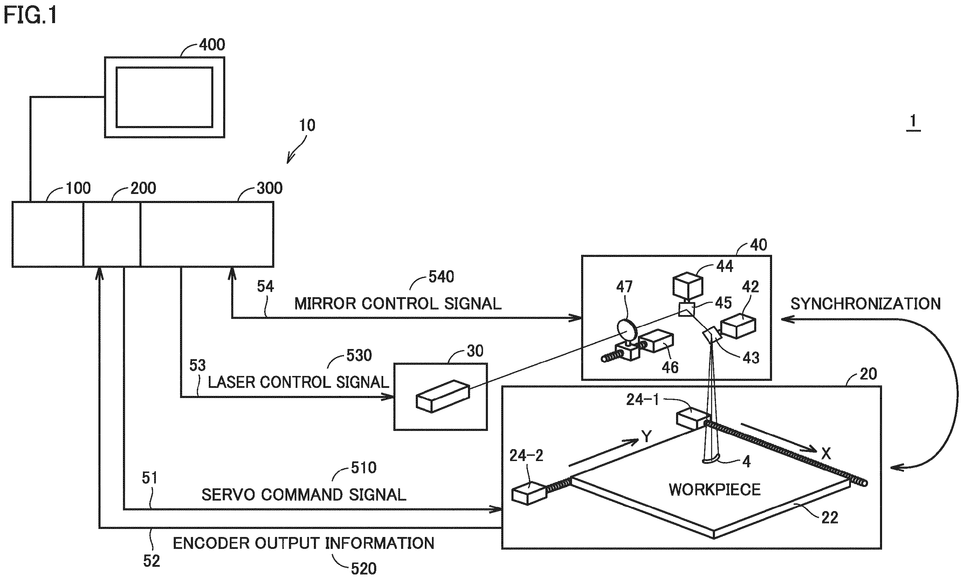

Fig. 1 is a schematic diagram showing an exemplary configuration of a control system 1 according to the present embodiment. Though Fig. 1 shows an example of a laser processing system as a typical example, an application to which the present invention is applied is not limited.

Control system 1 performs laser processing such as drilling, cutting, or marking on a workpiece 4 arranged on an XY stage 20. More specifically, control system 1 includes a control device 10, XY stage 20, laser 30, and a galvano mirror 40.

In laser processing onto workpiece 4, adjustment of a position of the workpiece by XY stage 20 and adjustment by galvano mirror 40, of a position of irradiation with laser beams generated by laser 30 are combined. Adjustment of the position of workpiece 4 by XY stage 20 is relatively large in amount of displacement and relatively long in response time. In contrast, adjustment of the position of irradiation by galvano mirror 40 is relatively small in amount of displacement and relatively short in response time.

Control device 10 includes a main control unit 100, a stage control unit 200, and a laser control unit 300.

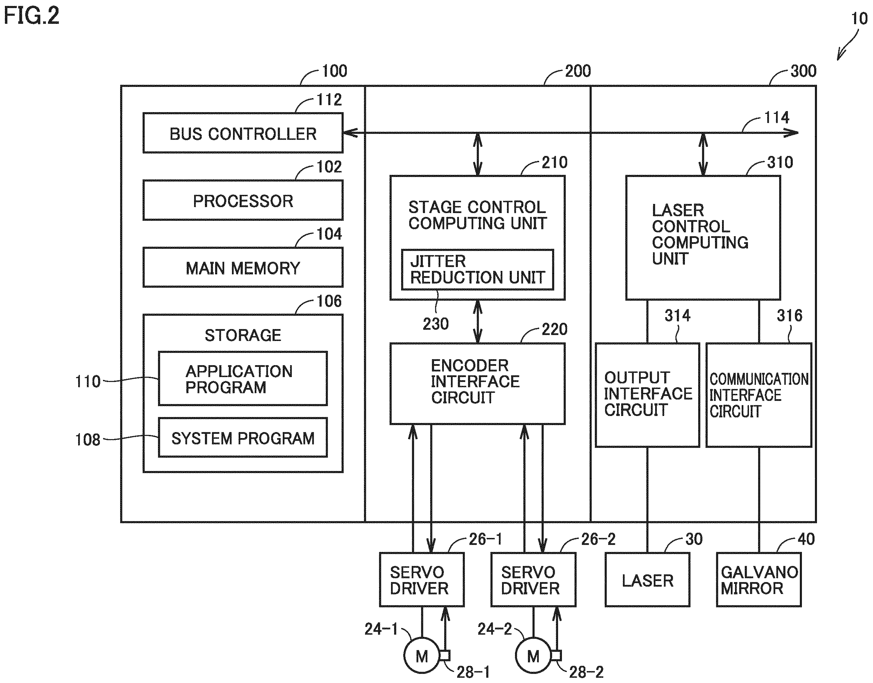

Main control unit 100 corresponds to a computing unit that executes an application program 110 (see Fig. 2). Application program 110 is freely created in accordance with a mechanism and workpiece 4 to be controlled. A result of execution obtained by execution of application program 110 by main control unit 100 is used for generation of a control signal in stage control unit 200 and laser control unit 300. Main control unit 100 thus corresponds to a control computing unit configured to calculate a control command for control of a servo motor 24.

An operation display device 400 configured to output a command to control device 10 and to output a result of computation in control device 10 in response to an operation by a user may be connected to control device 10.

XY stage 20 includes a plate 22 where workpiece 4 is arranged and a servo motor 24-1 and a servo motor 24-2 (which may also collectively be referred to as "servo motor 24" below) configured to drive plate 22. In the example shown in Fig. 1, servo motor 24-1 displaces plate 22 in an X-axis direction and servo motor 24-2 displaces plate 22 in a Y-axis direction.

Servo motor 24 is controlled by control device 10. More specifically, stage control unit 200 outputs a servo command signal 510 through a control line 51 to servo drivers 26-1 and 26-2 (see Fig. 2) (which may also collectively be referred to as a "servo driver 26" below) that drive respective servo motors 24-1 and 24-2. Stage control unit 200 obtains encoder output information 520 through a control line 52 from encoders 28-1 and 28-2 (which may also collectively be referred to as an "encoder 28" below) connected to respective servo drivers 26-1 and 26-2.

Laser control unit 300 is connected to laser 30 through a control line 53 and outputs a laser control signal 530 indicating on and off to laser 30. Laser control unit 300 is connected to galvano mirror 40 through a communication line 54 and outputs a mirror control signal 540 indicating an optical path to galvano mirror 40. Galvano mirror 40 includes an X-axis scanner mirror 43, a Y-axis scanner mirror 45, and a lens 47. Light emitted from laser 30 sequentially propagates through lens 47, Y-axis scanner mirror 45, and X-axis scanner mirror 43, and is projected on XY stage 20.

An X-axis scanner motor 42 adjusts an angle of a reflection surface of X-axis scanner mirror 43, and a Y-axis scanner motor 44 adjusts an angle of a reflection surface of Y-axis scanner mirror 45. A Z-axis scanner motor 46 adjusts a distance of lens 47 relative to laser 30.

### <B. Exemplary Hardware Configuration of Control System 1>

An exemplary hardware configuration of control system 1 according to the present embodiment will now be described.

Fig. 2 is a schematic diagram showing an exemplary main hardware configuration of control system 1 according to the present embodiment. As described above, control device 10 includes main control unit 100, stage control unit 200, and laser control unit 300.

Main control unit 100 includes a processor 102, a main memory 104, a storage 106, and a bus controller 112 as main components.

Storage 106 is implemented by a solid state disk (SSD) or a flash memory, and for example, a system program 108 configured to provide a basic program execution environment and an application program 110 freely created in accordance with workpiece 4 are stored therein.

Processor 102 is typically implemented by a central processing unit (CPU) or a micro-processing unit (MPU), and it implements overall control by control system 1 by reading system program 108 and application program 110 stored in storage 106 and developing the program on main memory 104 and executing the same.

Main control unit 100 is electrically connected to stage control unit 200 and laser control unit 300 through an internal bus 114. Bus controller 112 mediates data communication through internal bus 114.

Though an exemplary configuration in which necessary processing is provided by execution of a program by processor 102 is shown, a part or the entirety of this provided processing may be performed by dedicated hardware circuitry (for example, an application specific integrated circuit (ASIC) or a field-programmable gate array (FPGA)).

Stage control unit 200 generates and outputs servo command signal 510 to be provided to servo drivers 26-1 and 26-2. More specifically, stage control unit 200 includes a stage control computing unit 210 and an encoder interface circuit 220.

Stage control computing unit 210 generates a command to be provided to servo drivers 26-1 and 26-2 in accordance with a computed value (command value) calculated by execution of application program 110 by main control unit 100. Stage control computing unit 210 is implemented, for example, by computing circuitry configured with a processor, an ASIC, an FPGA, or the like.

Encoder interface circuit 220 outputs servo command signal 510 in accordance with a command from main control unit 100. Servo command signal 510 includes information on an amount of displacement, a speed, an angular velocity, or the like in a control cycle for control of servo driver 26.

Encoder interface circuit 220 corresponds to an obtaining unit configured to obtain position data from encoder 28 mechanically coupled to servo motor 24 of interest. More specifically, encoder interface circuit 220 obtains encoder output information 520 from each of encoders 28. Encoder output information 520 includes position data indicated by encoder 28. Encoder output information 520 may be transmitted in periodically transmitted frames.

Stage control computing unit 210 calculates a state value (a position, a speed, an acceleration, or the like) of servo driver 26 based on encoder output information 520 and outputs the state value to main control unit 100. Stage control computing unit 210 includes a jitter reduction unit 230 configured to reduce jitter included in encoder output information 520. Details of processing by jitter reduction unit 230 will be described later.

Stage control computing unit 210 and encoder interface circuit 220 may be implemented by a single ASIC or FPGA.

Laser control unit 300 generates and outputs laser control signal 530 to be provided to laser 30 and mirror control signal 540 to be provided to galvano mirror 40. More specifically, laser control unit 300 includes a laser control computing unit 310, an output interface circuit 314, and a communication interface circuit 316.

Laser control computing unit 310 generates a command to be provided to laser 30 and galvano mirror 40 in accordance with a computed value (command value) calculated by execution of application program 110 by main control unit 100. Laser control computing unit 310 is implemented, for example, by computing circuitry configured with a processor, an ASIC, an FPGA, or the like.

Laser control computing unit 310 generates laser control signal 530 and mirror control signal 540.

Output interface circuit 314 outputs laser control signal 530 to be provided to laser 30 in accordance with a command generated by laser control computing unit 310.

Communication interface circuit 316 outputs mirror control signal 540 to be provided to galvano mirror 40 in accordance with a command generated by laser control computing unit 310.

Laser control computing unit 310, output interface circuit 314, and communication interface circuit 316 may be implemented by a single ASIC or FPGA.

### <C. Object>

A novel object to be achieved by control system 1 according to the present embodiment will now be described.

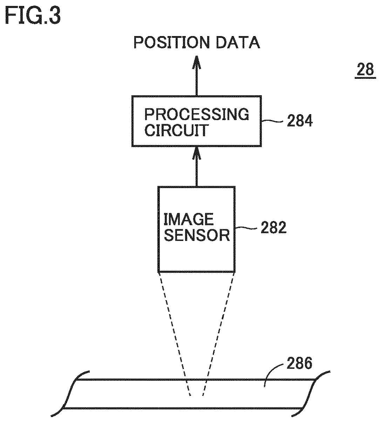

Fig. 3 is a diagram for illustrating an exemplary principle of detection by encoder 28 in control system 1 according to the present embodiment. Referring to Fig. 3, an optical absolute encoder configured to output an absolute position is assumed as encoder 28. More specifically, encoder 28 includes an image sensor 282, a processing circuit 284, and a scale 286.

On a surface of scale 286, density information obtained by encoding information indicating the absolute position is printed. With displacement of an object to be detected, relative relation between image sensor 282 and scale 286 is varied. Specifically, depending on displacement of the object to be detected, an area of scale 286 included in a field of view of image sensor 282 successively varies.

In the case of a linear encoder, scale 286 is arranged on a straight line, and in the case of a rotary encoder, scale 286 is arranged on a circumferential surface.

An image (a part of scale 286) taken by image sensor 282 is outputted to processing circuit 284. Processing circuit 284 decodes the inputted image to specify a position. The specified position may be an absolute position or a relative position on scale 286. Position data indicating the position specified by processing circuit 284 is transmitted to stage control unit 200 at least as a part of encoder output information 520.

Noise may be introduced in the taken image by being affected by random noise (for example, shot noise, Johnson noise, 1/f noise, or the like) in imaging of scale 286 by image sensor 282. When the image in which noise has been introduced is decoded, an erroneous position is specified. Consequently, even while the object to be detected is in a standstill (a state in which relative relation between image sensor 282 and scale 286 does not vary), jitter may be caused at the specified position.

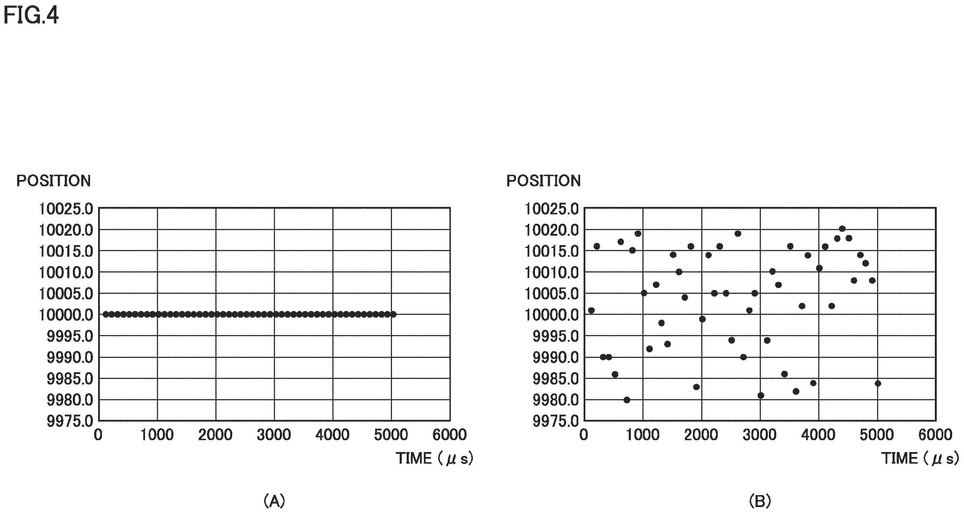

Fig. 4 is a schematic diagram showing exemplary jitter which may be caused in encoder 28 in control system 1 according to the present embodiment.

In the state in which the object to be detected is in a standstill (the state in which relative relation between image sensor 282 and scale 286 does not vary), as shown in Fig. 4 (A), the identical position must be kept outputted regardless of lapse of time. In actual, however, as shown in Fig. 4 (B), the specified position may randomly vary with lapse of time. Being affected by random noise as described above, variation in position is random rather than being regular.

### <D. Jitter Reduction Unit 230>

Control system 1 according to the present embodiment includes jitter reduction unit 230 (stage control unit 200) in order to achieve the object as described above. In consideration of a mechanism of occurrence of jitter as described above, jitter reduction unit 230 activates processing for reducing jitter included at the position outputted from encoder 28 only while servo driver 26 is not driving servo motor 24. Conversely, jitter reduction unit 230 outputs as an effective result, the position outputted from encoder 28 as it is while servo driver 26 is driving servo motor 24.

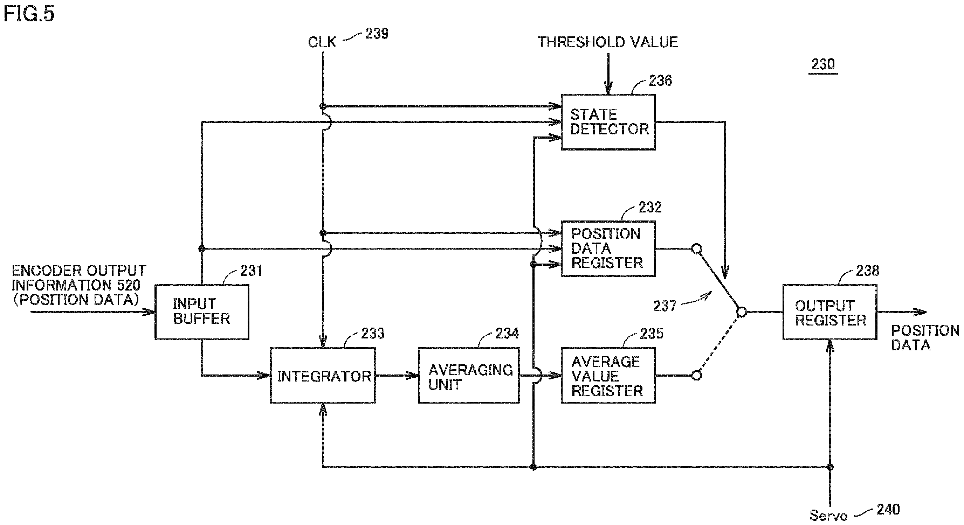

Fig. 5 is a schematic diagram showing an exemplary functional configuration of jitter reduction unit 230 in control system 1 according to the present embodiment. Referring to Fig. 5, jitter reduction unit 230 includes, as its functional configuration, an input buffer 231, a position data register 232, an integrator 233, an averaging unit 234, an average value register 235, a state detector 236, a selector 237, and an output register 238.

Input buffer 231 holds a latest value of position data included in encoder output information 520.

Position data register 232 reads position data obtained immediately after start of the control cycle and has the position data stored therein, in accordance with a clock signal 239 (which is also expressed as "CLK" in the figure) and a control synchronization signal 240 (which is also expressed as "Servo" in the figure).

Clock signal 239 is a pulsed signal for controlling timing to obtain encoder output information 520. For example, encoder output information 520 is obtained at the timing of rise of clock signal 239. Control synchronization signal 240 is a pulsed signal for controlling a cycle of update of servo command signal 510. For example, during a period of ON of servo command signal 510, computing processing necessary for generation of servo command signal 510 is performed, and during a period of OFF of servo command signal 510, computing processing for generation and output of servo command signal 510 is performed.

Position data register 232 reads position data held in input buffer 231, for example, when clock signal 239 first falls immediately after rise of control synchronization signal 240 from OFF to ON.

Integrator 233 and averaging unit 234 correspond to a smoothing unit configured to smooth position data from encoder 28.

Integrator 233 integrates a prescribed number of pieces of position data obtained immediately after start of the control cycle in accordance with clock signal 239 and control synchronization signal 240. More specifically, when control synchronization signal 240 rises from OFF to ON, integrator 233 resets the stored integrated value. When clock signal 239 falls, integrator 233 then reads the position data held in input buffer 231 and successively adds the position data to the stored integrated value. Integrator 233 repeats reading and addition of the position data a prescribed number of times of averaging (for example, three times).

Averaging unit 234 calculates average value data by dividing the integrated value stored in integrator 233 by the number of times of averaging. The average value data calculated by averaging unit 234 is stored in average value register 235.

Integrator 233 and averaging unit 234 (smoothing unit) thus calculate the average value data by averaging a plurality of pieces of position data.

State detector 236 detects an operating state of servo motor 24 mechanically coupled to encoder 28 of interest. Typically, state detector 236 determines whether or not servo motor 24 is operating based on magnitude of temporal change in position data from encoder 28. More specifically, state detector 236 detects the state of servo motor 24 based on whether or not a maximum value of differences (absolute values) between adjacent pieces of position data obtained while an ON state of control synchronization signal 240 is maintained after rise thereof from OFF to ON has exceeded a predetermined threshold value (determined in accordance with magnitude of jitter caused while servo motor 24 is stopped).

Selector 237 and output register 238 correspond to the output unit configured to output position data from encoder 28 every control cycle.

Selector 237 allows connection of one of position data register 232 and average value register 235 to output register 238. More specifically, selector 237 outputs the position data stored in position data register 232 to output register 238 while servo motor 24 mechanically coupled to encoder 28 of interest is operating, based on a result of detection by state detector 236. While servo motor 24 mechanically coupled to encoder 28 of interest is stopped, on the other hand, selector 237 outputs the average value data stored in average value register 235 to output register 238.

Output register 238 outputs the position data stored therein to main control unit 100.

Thus, while servo motor 24 is operating, selector 237 and output register 238 (output unit) output the position data from encoder 28 as it is, and while servo motor 24 is stopped, they output smoothed position data (for example, the average value data). While servo motor 24 is operating, the position data obtained immediately after start of each control cycle may be outputted.

By adopting the functional configuration as shown in Fig. 5, such a situation as fluctuation of the position data while servo motor 24 is stopped can be avoided.

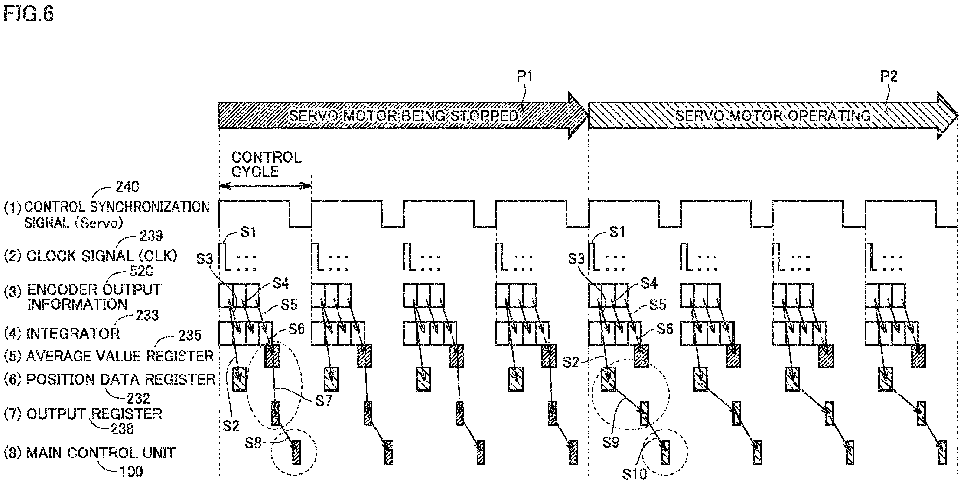

Fig. 6 shows an exemplary time chart for illustrating processing in jitter reduction unit 230 in control system 1 according to the present embodiment. Fig. 6 shows two cases; in one of which servo motor 24 is stopped, and in the other of which servo motor 24 is operating.

Referring to Fig. 6, while servo motor 24 is stopped (period P1), when first fall of clock signal 239 occurs immediately after rise from OFF to ON of control synchronization signal 240 (Servo) (step S 1), stage control unit 200 (jitter reduction unit 230) has position data included in obtained encoder output information 520 stored in position data register 232 (step S2).

In addition, each time of first fall of clock signal 239, stage control unit 200 adds the position data included in obtained encoder output information 520 to integrator 233 (steps S3 to S5). Though three is designated as the number of times of averaging in the example shown in Fig. 6, the number of times of averaging may be larger or smaller. When integration corresponding to the designated number of times of averaging is completed, stage control unit 200 calculates the average value (average value data) by dividing the integrated value of the position data by the number of times of averaging and has the average value stored in average value register 235 (step S6).

Stage control unit 200 detects the state of servo motor 24 based on whether or not a maximum value of differences (absolute values) between adjacent pieces of position data obtained while control synchronization signal 240 (Servo) is maintained ON has exceeded a predetermined threshold value. Since the maximum value of the differences between the position data has not exceeded the predetermined threshold value during this period, stage control unit 200 determines that servo motor 24 is stopped. Stage control unit 200 then outputs the average value data stored in average value register 235 to output register 238 (step S7).

Finally, the average value data stored in output register 238 is outputted as the position data to main control unit 100 (step S8).

While servo motor 24 is operating (period P2), on the other hand, processing as in steps S1 to S6 is performed. In succession, stage control unit 200 detects the state of servo motor 24 based on whether or not the maximum value of differences (absolute values) between adjacent pieces of position data obtained while control synchronization signal 240 (servo) is maintained ON has exceeded the predetermined threshold value. Since the maximum value of the differences between the position data has exceeded the predetermined threshold value during this period, stage control unit 200 determines that servo motor 24 is operating. Stage control unit 200 then outputs the position data stored in position data register 232 to output register 238 (step S9).

Finally, the position data stored in output register 238 is outputted to main control unit 100 (step S10).

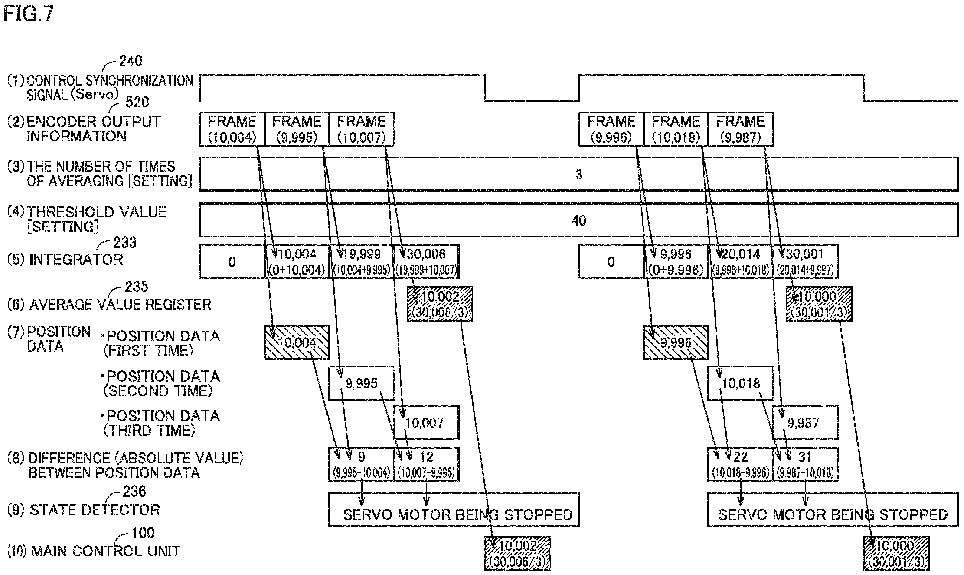

Fig. 7 shows a specific example (while servo motor 24 is stopped) of the time chart for illustrating processing in jitter reduction unit 230 in control system 1 according to the present embodiment. Referring to Fig. 7, encoder output information 520 includes a frame in which position data (a numerical value indicating a position) is stored.

Integrator 233 successively adds position data included in the frames. In the first cycle shown in Fig. 7, for example, values of position data for three times are "10,004", "9,995", and "10,007", respectively, and hence the average value data is "10,002".

Since the maximum value of the differences (absolute values) between adjacent pieces of position data is "12" and does not exceed "40" which is the threshold value determined and set in advance, servo motor 24 is determined as not operating. Consequently, "10,002" which is average data is outputted as the position data.

Similarly, in the second cycle shown in Fig. 7, for example, values of position data for three times are "9,996", "10,018", and "9,987", respectively, and hence the average value data is "10,000".

Since the maximum value of the differences (absolute values) between adjacent pieces of position data is "31" and does not exceed "40" which is the threshold value determined and set in advance, servo motor 24 is determined as not operating. Consequently, "10,000" which is average data is outputted as the position data.

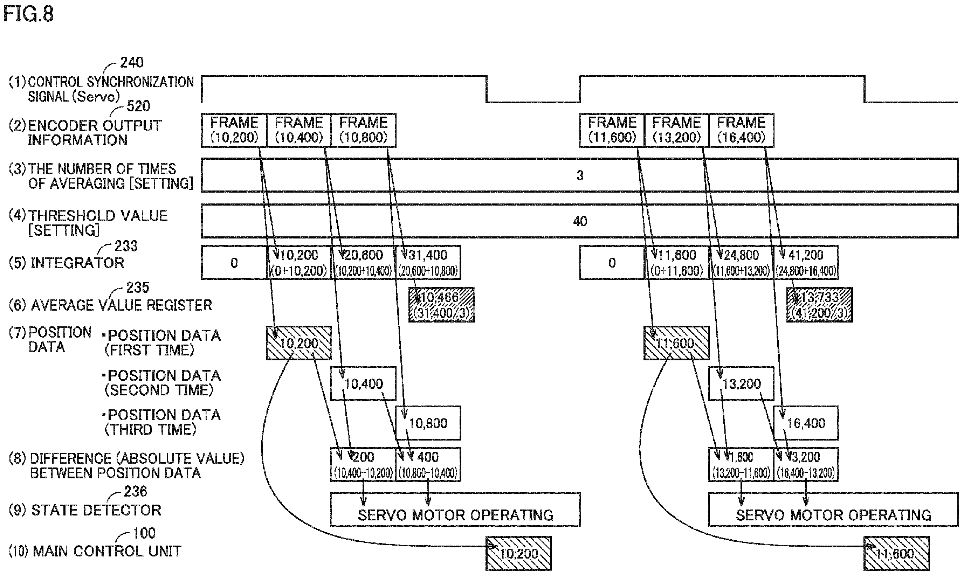

Fig. 8 shows a specific example (while the servo motor is operating) of the time chart for illustrating processing in jitter reduction unit 230 in control system 1 according to the present embodiment. In the first cycle shown in Fig. 8, for example, values of position data for three times are "10,200", "10,400", and "10,800", respectively, and hence the maximum value of the differences (absolute values) between adjacent pieces of position data is "400". Since this difference has exceeded "40" which is the threshold value determined and set in advance, servo motor 24 is determined as operating. Consequently, "10,200" which is the position data obtained first in the cycle is outputted.

Similarly, in the second cycle shown in Fig. 8, for example, values of position data for three times are "11,600", "13,200", and "16,400", respectively, and hence the maximum value of the differences (absolute values) between adjacent pieces of position data is "3,200". Since this difference has exceeded "40" which is the threshold value determined and set in advance, servo motor 24 is determined as operating. Consequently, "11,600" which is the position data obtained first in the cycle is outputted.

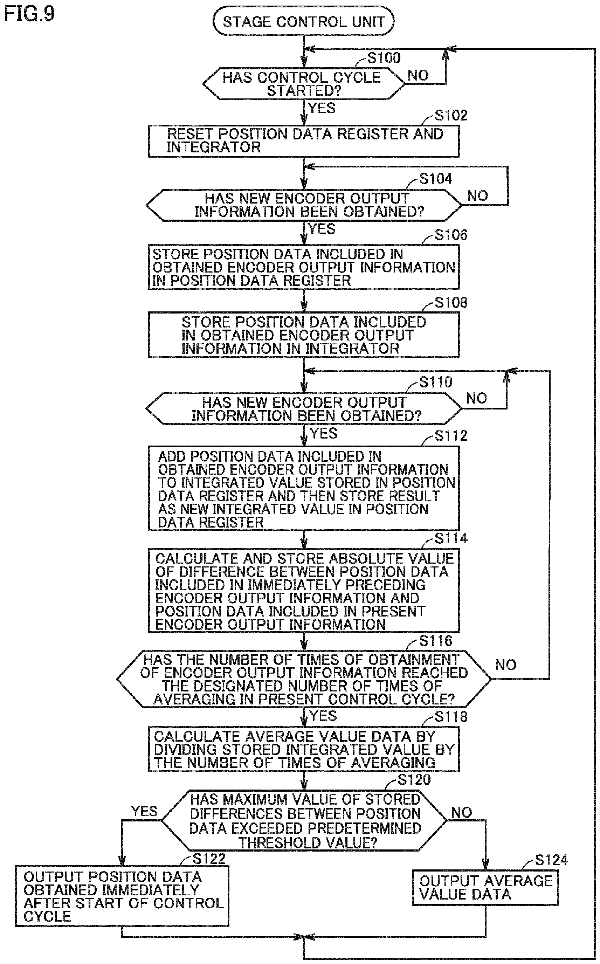

Fig. 9 is a flowchart showing a processing procedure in stage control unit 200 in control system 1 according to the present embodiment. Referring to Fig. 9, stage control unit 200 (jitter reduction unit 230) monitors rise of control synchronization signal 240 and determines whether or not the control cycle has started (step S100). When the control cycle has not started (NO in step S 100), processing in step S 100 is repeated.

When the control cycle has started (YES in step S 100), stage control unit 200 resets position data register 232 and integrator 233 (step S102).

Stage control unit 200 then monitors fall of clock signal 239 to determine whether or not it has obtained new encoder output information 520 (step S104). When new encoder output information 520 has not been obtained (NO in step S104), processing in step S104 is repeated.

When stage control unit 200 has obtained new encoder output information 520 (YES in step S 104), it has the position data included in obtained encoder output information 520 stored in position data register 232 (step S106) and has the position data stored in integrator 233 (step S108).

In succession, stage control unit 200 monitors fall of clock signal 239 and determines whether or not it has obtained new encoder output information 520 (step S110). When new encoder output information 520 has not been obtained (NO in step S110), processing in step S110 is repeated.

When stage control unit 200 has obtained new encoder output information 520 (YES in step S110), it adds the position data included in obtained encoder output information 520 to the integrated value stored in position data register 232 and then has the resultant value stored as the new integrated value in position data register 232 (step S112). In addition, stage control unit 200 calculates an absolute value of a difference between the position data included in immediately preceding encoder output information 520 and the position data included in present encoder output information 520 and has the absolute value stored (step S114).

Stage control unit 200 determines whether or not the number of times of obtainment of encoder output information 520 has reached the designated number of times of averaging in the present control cycle (step S1 16). When the number of times of obtainment of encoder output information 520 has not reached the designated number of times of averaging (NO in step S1 16), processing in step S110 or later is repeated.

Stage control unit 200 thus performs processing for obtaining position data from encoder 28 (steps S104 and S 110).

When the number of times of obtainment of encoder output information 520 has reached the designated number of times of averaging (YES in step S 1 16), the stage control unit calculates average value data by dividing the integrated value stored in step S 112 by the number of times of averaging (step S 118).

Stage control unit 200 determines whether or not the maximum value of the differences between position data stored in step S 114 has exceeded the predetermined threshold value (step S120). In other words, stage control unit 200 performs processing for detecting the operating state of servo motor 24 mechanically coupled to encoder 28.

When the maximum value of the differences between the position data has exceeded the predetermined threshold value (YES in step S 120), stage control unit 200 outputs the position data obtained immediately after start of the control cycle and stored in step S106 (step S122).

In contrast, when the maximum value of the differences between the position data has not exceeded the predetermined threshold value (NO in step S 120), stage control unit 200 outputs the average value data calculated in step S 118 (step S124). Processing in step S 100 or later is then repeated.

Thus, while servo motor 24 is operating, stage control unit 200 outputs position data from encoder 28 as it is, and while servo motor 24 is stopped, stage control unit 200 outputs smoothed position data obtained by smoothing of the position data from encoder 28 (steps S120 to S124).

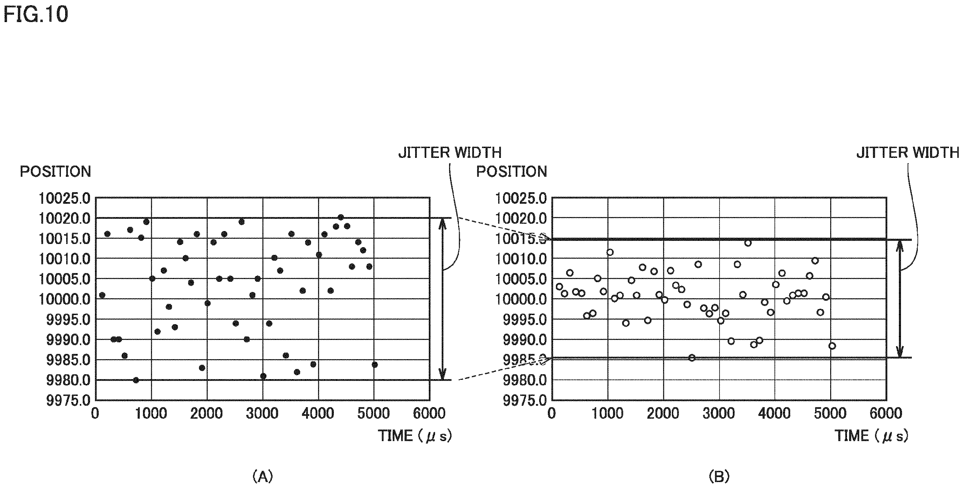

Fig. 10 is a diagram showing an exemplary effect of jitter reduction by jitter reduction unit 230 in control system 1 according to the present embodiment. Fig. 10 (A) shows exemplary change with lapse of time, in position data outputted from encoder 28. Fig. 10 (B) shows a result of jitter reduction by jitter reduction unit 230 with lapse of time in such position data.

As can be seen based on comparison between Fig. 10 (A) and Fig. 10 (B), jitter caused in the position data can be reduced.

As described above, jitter reduction unit 230 in control system 1 according to the present embodiment makes selection between output of the position data obtained from encoder 28 as it is and output of a value obtained by smoothing of a plurality of pieces of position data, depending on whether or not servo motor 24 is operating. By adopting such a configuration, jitter in the position data caused while servo motor 24 is stopped can be reduced.

Determination as to whether or not servo motor 24 is operating is made based on whether or not an amount of jitter caused in the position data obtained from encoder 28 has exceeded a predetermined threshold value. By adopting such a configuration, whether or not encoder 28 is operating can readily be determined.

### <E. Incremental Encoder>

Though the description above gives the example of the absolute encoder configured to output an absolute position, an incremental encoder configured to output a relative position (position change) may be applicable.

The incremental encoder typically outputs an A-phase pulse and a B-phase pulse shifted by 90° from the A-phase pulse, in accordance with an amount of change. The incremental encoder calculates the amount of change based on the number of A-phase pulses and the number of B-phase pulses, and determines a direction of rotation (increment/decrement) in accordance with a difference in angle between the A-phase pulse and the B-phase pulse. In other words, position data is successively updated each time the A-phase pulse and the B-phase pulse are received.

Therefore, a scheme to periodically obtain successively updated position data and calculate an average value (average value data) is introduced.

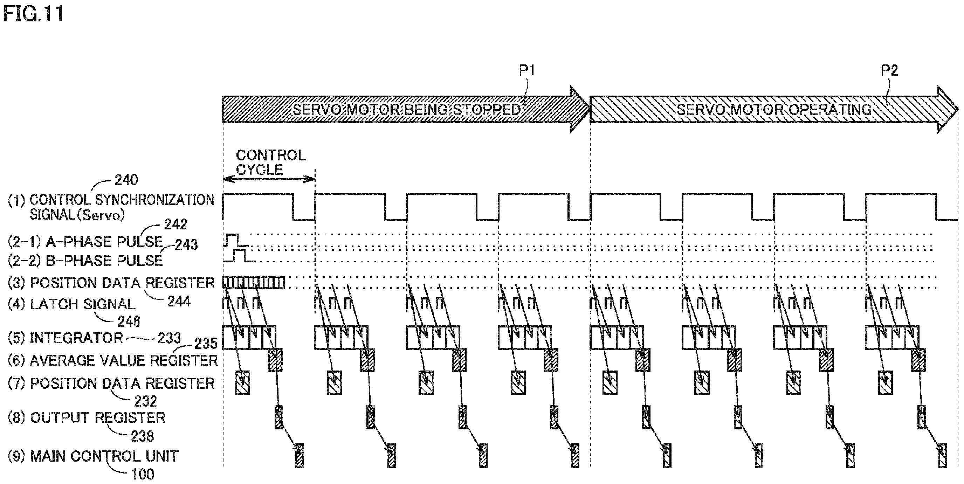

Fig. 11 shows an exemplary time chart for illustrating a modification of processing in jitter reduction unit 230 in control system 1 according to the present embodiment. Fig. 11 shows two cases; in one of which servo motor 24 is stopped, and in the other of which servo motor 24 is operating.

Referring to Fig. 11, encoder interface circuit 220 of stage control unit 200 is assumed to receive input of an A-phase pulse 242 and a B-phase pulse 243 from the incremental encoder. Encoder interface circuit 220 includes a position data register 244 configured to update position data based on A-phase pulse 242 and B-phase pulse 243 and store latest position data therein.

Stage control unit 200 generates a latch signal 246 for periodic reading of the position data stored in position data register 244. Being triggered by latch signal 246, the latest position data stored in position data register 244 is transferred to input buffer 231 and inputted to position data register 232, integrator 233, and the like.

In other words, adoption of the incremental encoder is different from adoption of the absolute encoder in that the position data is updated in accordance with the A-phase pulse and the B-phase pulse and that latch signal 246 for periodic reading of the position data or the like is added.

Since the configuration is otherwise the same, detailed description will not be repeated.

### <F. Exemplary Implementation of Stage Control Unit 200>

An exemplary implementation of stage control unit 200 will now be described.

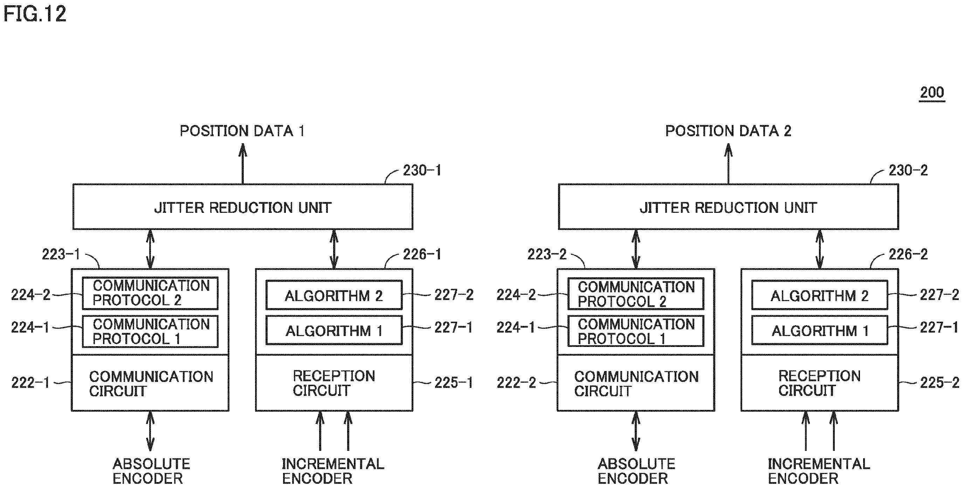

Fig. 12 is a schematic diagram showing an exemplary implementation of stage control unit 200 in control system 1 according to the present embodiment. Stage control unit 200 may be configured to be adapted to both of the absolute encoder and the incremental encoder.

Referring to Fig. 12, more specifically, stage control unit 200 includes a communication circuit 222-1, a processing circuit 223-1, a reception circuit 225-1, a processing circuit 226-1, and a jitter reduction unit 230-1 as features associated with a first channel (first axis) through which position data 1 is outputted.

Communication circuit 222-1 receives a frame including position data from the absolute encoder. Processing circuit 223-1 controls exchange of the frame between the absolute encoder and communication circuit 222-1. Processing circuit 223-1 may support a plurality of communication protocols 224-1, 224-2, ... In this case, processing circuit 223-1 communicates using the communication protocol selected in advance setting.

Reception circuit 225-1 receives a pulsed signal from the incremental encoder. Processing circuit 226-1 may support a plurality of algorithms 227-1, 227-2, ... for increment/decrement of the position data in accordance with a type of the pulsed signal received by reception circuit 225-1. In this case, processing circuit 226-1 updates the position data in accordance with the algorithm selected in advance setting.

Jitter reduction unit 230-1 performs processing for reduction of jitter on the position data outputted from processing circuit 223-1 or processing circuit 226-1.

Similarly, stage control unit 200 includes a communication circuit 222-2, a processing circuit 223-2, a reception circuit 225-2, a processing circuit 226-2, and a jitter reduction unit 230-2 as features associated with a second channel (a second axis) through which position data 2 is outputted. Since these features are similar to those associated with the first channel (first axis) through which position data 1 described above is outputted, detailed description will not be repeated.

By thus arranging jitter reduction unit 230 for each encoder 28, processing for reducing jitter caused in position data for each channel (axis) can be performed in parallel. In addition, adaptation to both of the configuration to receive a frame from the absolute encoder and the configuration to receive a pulsed signal from the incremental encoder can enhance a degree of freedom in selection of encoder 28. Adaptation to a plurality of types of communication protocols and processing algorithms can also enhance the degree of freedom in selection of encoder 28.

### <G. User Interface>

An exemplary user interface of control system 1 according to the present embodiment will now be described. The user typically checks necessary information and inputs desired setting with the use of operation display device 400 connected to control device 10.

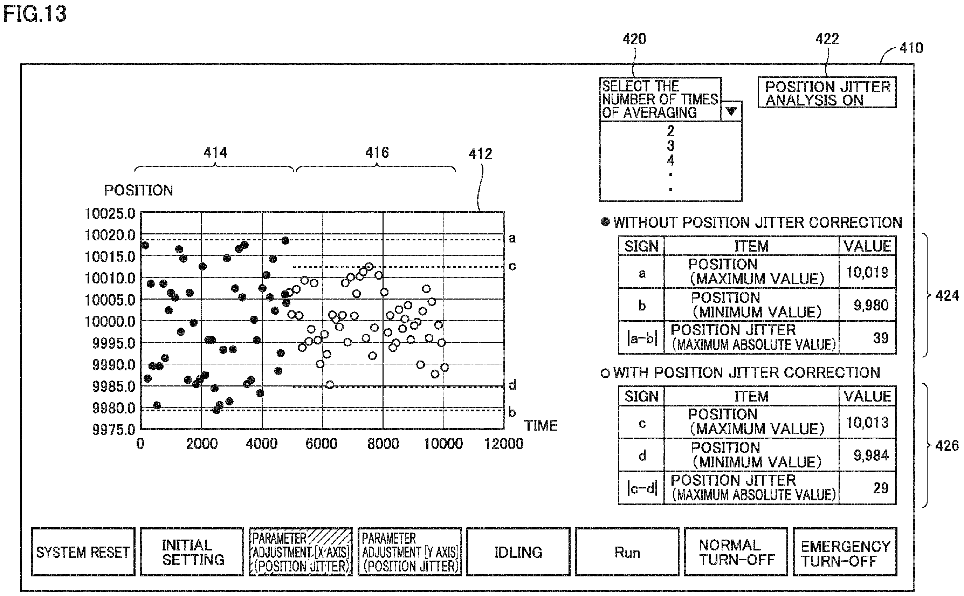

Fig. 13 is a schematic diagram showing an exemplary screen 410 shown on operation display device 400 in control system 1 according to the present embodiment. Referring to Fig. 13, screen 410 receives setting associated with jitter reduction and outputs an effect of jitter reduction.

More specifically, screen 410 includes a graph area 412 where temporal change in position data is shown, a selector 420 for selection of the number of times of averaging, an analysis start button 422 for performing analysis processing, a pre-correction state representation 424 that shows a state before application of jitter reduction, and a post-correction state representation 426 that shows a state after application of jitter reduction.

In graph area 412, temporal change 414 in position data obtained in the state before application of jitter reduction and temporal change 416 in position data obtained in the state after application of jitter reduction are shown. Operation display device 400 thus shows the state of the position data from encoder 28 and the state of the smoothed position data.

When analysis start button 422 is selected, analysis processing for analyzing the state of the position data obtained from encoder 28 is performed.

Though the analysis processing may be performed in operation display device 400, stage control unit 200 performs main processing.

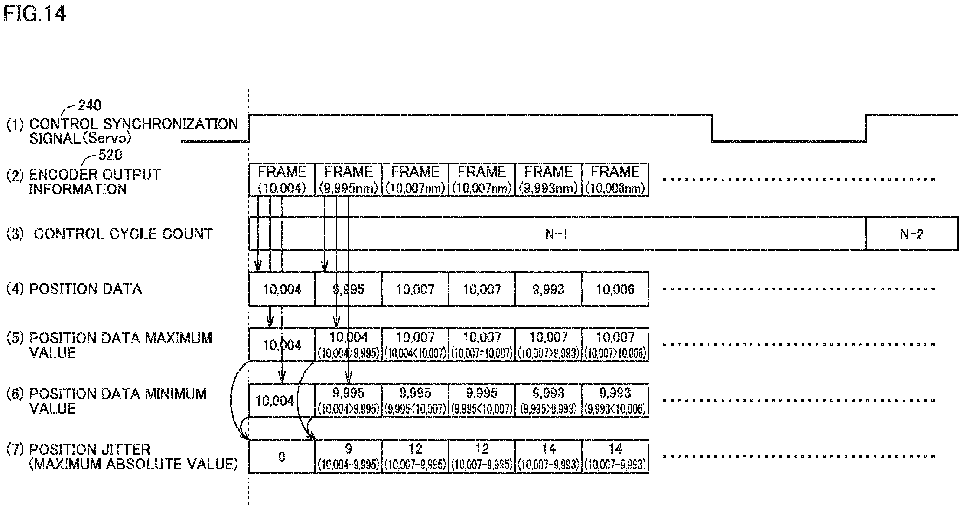

Fig. 14 shows an exemplary time chart for illustrating the analysis processing in control system 1 according to the present embodiment. Referring to Fig. 14, when the analysis processing is started, encoder output information 520 is successively obtained from encoder 28 and position information included in obtained encoder output information 520 is stored.

A plurality of pieces of encoder output information 520 are obtained every control cycle. The analysis processing is continued in at least one control cycle (until a control count reaches a predetermined number of times of setting). Therefore, at least one piece of position data is obtained every control cycle.

When the position data is obtained in the predetermined control cycles, a maximum value and a minimum value are extracted from the obtained position data, and a difference (maximum absolute value) between the extracted maximum value and minimum value is calculated as position jitter.

In the example shown in Fig. 14, the maximum value of the position data is "10,007" and the minimum value of the position data is "9,993", and hence the position jitter is "14". As shown in Fig. 14, stage control unit 200 may include a register where the maximum value of the position data is stored and a register where the minimum value of the position data is stored.

The maximum value of the position data, the minimum value of the position data, and the position jitter calculated in the analysis processing shown in Fig. 14 are outputted as pre-correction state representation 424 on screen 410 shown in Fig. 13.

The user selects any number of times of averaging in selector 420 on screen 410 by referring to results of the analysis processing. Operation display device 400 thus receives setting of a degree of smoothing (for example, the number of times of averaging). As the number of times of averaging is selected, processing for jitter reduction is activated. The number of times of averaging which is the number of pieces of position data to be used for calculation of the average value data may freely be set.

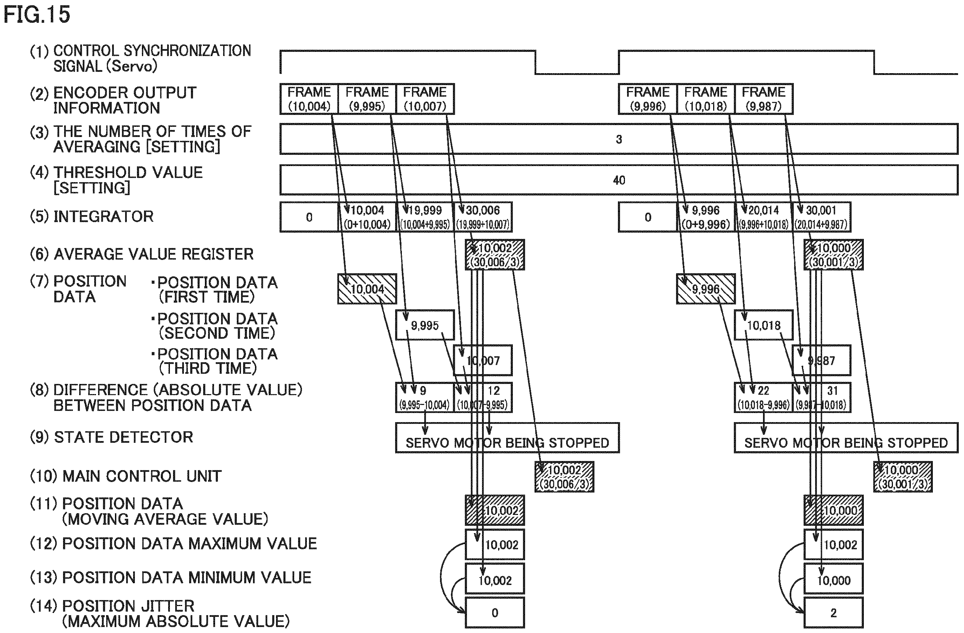

Fig. 15 shows an exemplary time chart for illustrating jitter reduction processing in control system 1 according to the present embodiment. Referring to Fig. 15, when the jitter reduction processing is started, position data is averaged in accordance with the selected number of times of averaging to calculate the average value data. Servo motor 24 associated with encoder 28 of interest is assumed as being stopped.

The maximum value and the minimum value are extracted from the average value data successively calculated in accordance with the number of times of averaging, and the difference (maximum absolute value) between the extracted maximum value and minimum value is calculated as the position jitter.

The maximum value of the position data, the minimum value of the position data, and the position jitter calculated in the analysis processing shown in Fig. 15 are outputted as post-correction state representation 426 on screen 410 shown in Fig. 13.

The user can determine an appropriate number of times of averaging and can also check an effect of reduction of position jitter while referring to screen 410 shown on operation display device 400.

### <H. Modification>

Though N-term moving average is adopted as processing for reduction of jitter in the description above, without being limited thereto, any smoothing processing can be adopted. For example, smoothed average value data may be calculated by input of time-series data of position data to a low pass filter.

Though processing for comparison between the maximum value of the differences (absolute values) between adjacent pieces of position data and a predetermined threshold value is described above as exemplary processing for determination as to whether or not servo motor 24 is operating based on magnitude of temporal change in position data, without being limited thereto, any method can be adopted. For example, a method of determination based on magnitude of change that occurs in at least three pieces of position data or the like can also be adopted.

Though an example in which whether or not servo motor 24 mechanically coupled to encoder 28 of interest is operating is determined based on an amount of change in position data is described above, without being limited thereto, whether or not servo motor 24 is operating may be determined based on a state of servo command signal 510 to servo motor 24 of interest. Further separately, whether or not servo motor 24 is operating may be determined based on a state of operations of the servo driver.

Though the position data obtained immediately after start of the control cycle is outputted while servo motor 24 is operating in the description above, the output does not necessarily have to be provided immediately after start of the control cycle, and position data obtained at timing of lapse of a predetermined time period since start of the control cycle may be outputted.

### <I. Additional Aspects>

The present embodiment as described above encompasses technical concepts as below.

### [Configuration 1]

A control device includes:
an obtaining unit (220) configured to obtain position data from an encoder (28);
a smoothing unit (233, 234) configured to smooth the position data from the encoder;
a state detector (236) configured to detect an operating state of a motor (24) mechanically coupled to the encoder; and
an output unit (237, 238) configured to output the position data from the encoder every control cycle, and
the output unit is configured to
   output the position data from the encoder as it is while the motor is operating, and
   output smoothed position data while the motor is stopped.

### [Configuration 2]

In the control device according to Configuration 1, the state detector is configured to determine whether the motor is operating based on magnitude of temporal change in position data from the encoder.

### [Configuration 3]

In the control device according to Configuration 1 or 2, the smoothing unit is configured to calculate average value data by averaging a plurality of pieces of position data.

### [Configuration 4]

In the control device according to Configuration 3, the number of pieces of position data to be used for calculation of the average value data is freely set.

### [Configuration 5]

In the control device according to any one of Configurations 1 to 4, the output unit is configured to output the position data obtained immediately after start of each control cycle while the motor is operating.

### [Configuration 6]

In the control device according to any one of Configurations 1 to 5, the encoder includes an absolute encoder.

### [Configuration 7]

A control system includes:
a control device (10); and
a motor (24) controlled by the control device,
the control device including
   a control computing unit (100) configured to calculate a control command to control the motor,
   an obtaining unit (200) configured to obtain position data from an encoder mechanically coupled to the motor,
   a smoothing unit (233, 234) configured to smooth the position data from the encoder,
   a state detector (236) configured to detect an operating state of the motor, and
   an output unit (237, 238) configured to output the position data from the encoder to the control computing unit every control cycle, and
the output unit is configured to
   output the position data from the encoder as it is while the motor is operating, and
   output smoothed position data while the motor is stopped.

### [Configuration 8]

The control system according to Configuration 7 further includes a display (400) configured to show a state of the position data from the encoder and a state of the smoothed position data.

### [Configuration 9]

The control system according to Configuration 7 or 8 further includes a receiver (400) configured to receive setting of a degree of smoothing by the smoothing unit.

### [Configuration 10]

A processing method comprising:
obtaining position data from an encoder (28) (S104, S110);
detecting an operating state of a motor (24) mechanically coupled to the encoder (S120); and
outputting the position data from the encoder as it is while the motor is operating and outputting smoothed position data obtained by smoothing the position data from the encoder while the motor is stopped (S120 to S124).

### <J. Advantages>

According to control system 1 according to the present embodiment, a solution for achieving a novel object which is reduction of jitter in position data which may be caused while servo motor 24 mechanically coupled to encoder 28 is stopped can be provided.

It should be understood that the embodiment disclosed herein is illustrative and non-restrictive in every respect. The scope of the present invention is defined by the terms of the claims rather than the description above and is intended to include any modifications within the scope and meaning equivalent to the terms of the claims.

### REFERENCE SIGNS LIST

1 control system; 4 workpiece; 10 control device; 20 XY stage; 22 plate; 24 servo motor; 26 servo driver; 28 encoder; 30 laser; 40 galvano mirror; 42 X-axis scanner motor; 43 X-axis scanner mirror; 44 Y-axis scanner motor; 45 Y-axis scanner mirror; 46 Z-axis scanner motor; 47 lens; 51, 52, 53 control line; 54 communication line; 100 main control unit; 102 processor; 104 main memory; 106 storage; 108 system program; 110 application program; 112 bus controller; 114 internal bus; 200 stage control unit; 210 stage control computing unit; 220 encoder interface circuit; 222 communication circuit; 223, 226, 284 processing circuit; 224 communication protocol; 225 reception circuit; 227 algorithm; 230 jitter reduction unit; 231 input buffer; 232, 244 position data register; 233 integrator; 234 averaging unit; 235 average value register; 236 state detector; 237, 420 selector; 238 output register; 239 clock signal; 240 control synchronization signal; 242, 243 pulse; 246 latch signal; 282 image sensor; 286 scale; 300 laser control unit; 310 laser control computing unit; 314 output interface circuit; 316 communication interface circuit; 400 operation display device; 410 screen; 412 graph area; 414, 416 temporal change; 422 analysis start button; 424 pre-correction state representation; 426 post-correction state representation; 510 servo command signal; 520 encoder output information; 530 laser control signal; 540 mirror control signal; P1, P2 period

## Claims

1. A control device comprising:
an obtaining unit configured to obtain position data from an encoder;
a smoothing unit configured to smooth the position data from the encoder;
a state detector configured to detect an operating state of a motor mechanically coupled to the encoder; and
an output unit configured to output the position data from the encoder every control cycle, wherein
the output unit is configured to
output the position data from the encoder as it is while the motor is operating, and
output smoothed position data while the motor is stopped.

2. The control device according to claim 1, wherein
the state detector is configured to determine whether the motor is operating based on magnitude of temporal change in position data from the encoder.

3. The control device according to claim 1 or 2, wherein
the smoothing unit is configured to calculate average value data by averaging a plurality of pieces of position data.

4. The control device according to claim 3, wherein
the number of pieces of position data to be used for calculation of the average value data is freely set.

5. The control device according to any one of claims 1 to 4, wherein
the output unit is configured to output the position data obtained immediately after start of each control cycle, while the motor is operating.

6. The control device according to any one of claims 1 to 5, wherein
the encoder comprises an absolute encoder.

7. A control system comprising:
a control device; and
a motor controlled by the control device,
the control device comprising
a control computing unit configured to calculate a control command to control the motor,
an obtaining unit configured to obtain position data from an encoder mechanically coupled to the motor,
a smoothing unit configured to smooth the position data from the encoder,
a state detector configured to detect an operating state of the motor, and
an output unit configured to output the position data from the encoder to the control computing unit every control cycle, wherein
the output unit is configured to
output the position data from the encoder as it is while the motor is operating, and
output smoothed position data while the motor is stopped.

8. The control system according to claim 7, further comprising a display configured to show a state of the position data from the encoder and a state of the smoothed position data.

9. The control system according to claim 7 or 8, further comprising a receiver configured to receive setting of a degree of smoothing by the smoothing unit.

10. A processing method comprising:
obtaining position data from an encoder;
detecting an operating state of a motor mechanically coupled to the encoder; and
outputting the position data from the encoder as it is while the motor is operating and outputting smoothed position data obtained by smoothing the position data from the encoder while the motor is stopped.
